Europäisches Patentamt

(19) European Patent Office

Office européen des brevets

(11) Publication number: **0 136 315**
**B1**

(12) **EUROPEAN PATENT SPECIFICATION**

(45) Date of publication of patent specification: **26.07.89**

(21) Application number: **84900921.2**

(22) Date of filing: **26.01.84**

(86) International application number:
**PCT/US84/00108**

(87) International publication number:
**WO 84/03201 30.08.84 Gazette 84/21**

(51) Int. Cl.⁴: **A 23 G 3/30, A 23 L 1/236, A 23 L 1/226**

---

(54) SHELLAC ENCAPSULANT FOR ACTIVE INGREDIENTS IN CHEWING GUM.

---

(30) Priority: **18.02.83 US 467604**

(43) Date of publication of application:
**10.04.85 Bulletin 85/15**

(45) Publication of the grant of the patent:
**26.07.89 Bulletin 89/30**

(84) Designated Contracting States:
**AT BE CH DE FR GB LI LU NL SE**

(56) References cited:
**EP-A-0 024 297**
**FR-A-2 476 986**
**US-A-3 576 663**
**US-A-3 622 352**
**US-A-3 780 195**
**US-A-3 914 439**
**US-A-3 962 463**
**US-A-3 985 913**
**US-A-4 224 345**
**US-A-4 259 355**
**US-A-4 384 004**
**US-A-4 386 106**

**CHEMICAL ABSTRACTS, vol. 78, no. 1, 8
January 1973, p. 258, abstract 2995n,
Columbus, Ohio (US)**

(73) Proprietor: **WM. WRIGLEY JR. COMPANY**
**410 North Michigan Avenue**
**Chicago Illinois 60611 (US)**

(72) Inventor: **PATEL, Mansukh, M.**
**626 West Vermont**
**Villa Park, IL 60181 (US)**

(74) Representative: **Baillie, Iain Cameron et al**
**c/o Ladas & Parry Isartorplatz 5**
**D-8000 München 2 (DE)**

## Description

This invention relates in general to chewing gum compositions and, in particular, to the improvement comprising a food-grade shellac encapsulant for solid particles of high-potency sweetener incorporated in chewing gum.

As is well-known in the art, chewing gum comprises a neutral and tasteless masticatory chewing gum base and one or more non-masticatory active ingredients mixed into the base. As used herein, it is the high-potency sweetener which determines flavor and taste characteristics of the gum. In addition, the chewing gum may, and usually does, contain water-soluble and usually sweet non-masticatory bulking agents, a coloring agent and a plasticizing agent, the latter employed to improve the texture of the gum.

Certain high-potency sweeteners benefit from or require encapsulation in order to achieve a gradual and controlled release of the sweeteners during chewing or to promote their stability in chewing gum. For example, certain artificial sweeteners such as the dipeptide sweetener aspartame (L-spartyl-L-phenylalanine methyl ester) have been found to be excellent sugar substitutes in chewing gum. However, the stability of artificial dipeptide sweeteners is a function of water activity, time, temperature and pH. Under unfavorable conditions, aspartame spontaneously converts to diketopiperazine with proportional loss of sweetness. Aspartame also degrades as the result of reactions with aldehydes present in certain flavors. In order to maintain the stability and sweetness of aspartame in chewing gum, it is necessary to reduce as fast as possible the exposure of the aspartame to moisture, certain flavors and certain pH conditions.

Although the general technique of encapsulating sweeteners is well-known, the proir art known to applicant does not teach satisfactory encapsulating agents for high-potency sweeteners. For example, U.S. Patent Nos. 4,122,195 and 4,139,639 disclose encapsulation of aspartame in Capsul dextrin and gum arabic. However, such encapsulants, which are hydrophilic and moisture-permeable, have been found to be of only limited effectiveness in preventing the degradation of aspartame in chewing gum.

EP—A—24297 discloses an aromatic product for chewing gum, candies and the like comprising a nucleus containing at least one aroma or flavoring composition and at least one organic polymeric composition or natural resin.

While it would seem that hydrophobic encapsulating agents would provide better impermeability and gradual release characteristics than hydrophilic coatings, applicant is unaware of any hydrophobic coatings which have been successfully employed in the past for high-potency sweeteners for such in chewing gum. Most hydrophobic materials which could be used as encapsulants, such as polyvinyl acetate, waxes and fats, are dissolved in the chewing gum base when they are mixed into the heated gum mass during the gum manufacturing process. Other hydrophobic materials such as high molecular weight polyvinyl acetate and styrene butadiene rubber are substantially insoluble in the food-grade solvents which are required in encapsulating processes. Applicant is unaware of any prior disclosure of encapsulating materials which have both of the necessary qualities of being insoluble in chewing gum base yet sufficiently soluble in the food-grade solvents used in encapsulating processes.

According to the present invention there is provided a chewing gum composition comprising gum base, characterized by particles of high-potency sweetener, and a food grade shellac encapsulant surrounding said particles of the sweetener.

The shellac encapsulant, which is hydrophobic and insoluble in the gum base yet soluble in food-grade solvents such as ethanol, provides a substantially impermeable coating for the high-potency sweetener and achieves a controlled, gradual release of the sweetener as the encapsulant is broken down during chewing.

When used to coat dipeptide sweeteners, the shellac encapsulant substantially maintains their sweetness during storage of the chewing gum by minimizing the degradation of the dipeptide sweeteners to diketopiperazine or their reaction with aldehydes in certain chewing gum flavors.

In the present invention, the chewing gum comprises any chewable and substantially water-insoluble gum base in an amount ranging from approximately 18% to 99%, but preferably about 25%, by weight of the total chewing gum composition. The gum base may contain a calcium carbonate filler instead of a talc filler even if the chewing gum composition comprises the dipeptide sweetener aspartame (L-aspartyl-L-phenylalanine methyl ester, originally disclosed in U.S. Patents No. 3,492,131 and 3,642,491) or food acidulants. Although the calcium carbonate base has better chewing characteristics and is less expensive than the talc base, prior to the present invention, a talc base was in some cases preferred for use with aspartame and acids because calcium carbonate raises the gum pH and promotes degradation of the aspartame and neutralization of the acids; see, for example, U.S. Patent No. 4,246,286 which covers gum products which are substantially free of calcium carbonate and strongly basic constituents in order to provide a storage-stable aspartame chewing gum.

The chewing gum comprises particles of a high-potency sweetener and a food-grade shellac encapsulant surrounding said particles. The shellac encapsulation preferably is accomplished using a known fluidized bed coating method or a known roller bed coating method, although other coating methods can be used.

In the fluidized bed coating method, particles of the high-potency sweetener are suspended in a stream of pressurized air and sprayed with a solution of the encapsulating agent. When the ethanol solvent for the shellac evaporates, a coated sweetener particle remains. The velocity of the air flow can be adjusted so that when the desired coating level is reached, the weight of the coated particle causes it to drop out of the air stream and into a collecting bin.

In the roller bed coating method, particles of the sweetener are suspended in a solution of the encapsulating agent and its solvent. The sweetener is not appreciably soluble in the solvent. The suspension is deposited on a heated, rotating drum; the heat evaporates the solvent, leaving coated ingredient particles which are scraped from the roller. This method can be repeated in order to obtain thicker coatings, but different solvent systems or more rapid roller speeds must then be used to avoid re-dissolving of the encapsulant.

The shellac encapsulant provides a moisture-impermeable hydrophobic coating which is not soluble in the chewing gum base, thereby affording excellent protection for the high-potency sweeteners, particularly dipeptide sweeteners which are sensitive to certain moisture and pH conditions and aldehydes which may be present in the gum. At the same time, the shellac encapsulant effects controlled, gradual release of the sweetener to achieve extended gum sweetness and flavor.

The sweetener in the chewing gum comprises a high-potency sweetener, that is, one having a sweetness greater than about twenty times that of sucrose. Such a sweetener may be aspartame, saccharin, cyclamate, thaumatin, acesulfame K, dihydrochalcones, or combinations thereof. A preferred sweetener is aspartame present in an amount ranging from about 0.025% to about 2.0% by weight of the gum composition. For this artificial sweetener, the shellac encapsulating agent is present in an amount ranging from about 5.0% to about 90.0%, but preferably about 25.0% by weight of the aspartame.

The chewing gum optionally comprises a coloring agent in a conventional amount of about 0.1% to about 2.0% by weight and a plasticizing agent in an amount of about 0.1% to about 25% by weight of the gum composition. Liquid flavors, which are not encapsulated, may also be included in the gum.

The chewing gum may also comprise a sweet, water-soluble bulking agent although non-caloric or low-calorie gums can be prepared by using no bulking agents or bulking agents which have little or no assimilable caloric value. For sugar gums, the bulking agent may consist of dextrose, sucrose, maltose, dextrin, dried invert sugar, fructose, levulose, galactose, corn syrup or corn syrup solids, or combinations thereof. For sugarless gums, the bulking agent may comprise Polydextrose (a low-calorie carbohydrate manufactured by Pfizer) or a sugar alcohol such as sorbitol, mannitol, xylitol, or combinations thereof. Such bulking agents are present in an amount ranging from about 30% to about 80% by weight of the entire chewing gum composition.

The chewing gum can be manufactured in a conventional manner. First, the base is heated and placed in a mixer. If coloring is desired, it may be added at this point, followed by the bulking agent, if any, the shellac-encapsulated high-potency sweetener and the plasticizing agent. When the chewing gum is removed from the mixer, the mixture is rolled or extruded, cut into individual pieces, cooled and then wrapped in a known manner.

Example I

A sugarless chewing gum containing shellac-encapsulated aspartame was made according to the following formulation:

| Ingredient | Percent by weight |
|---|---|
| Gum base | 27.00 |
| Sorbitol powder | 41.525 |
| 70% sorbitol solution | 10.00 |
| Mannitol powder | 12.00 |
| Peppermint flavor | 1.20 |
| Glycerine | 8.00 |
| Color | 0.025 |
| Shellac-encapsulated aspartame | 0.25 |

Example II

A sugar chewing gum containing shellac-encapsulated aspartame can be made according to the following formulation:

| Ingredient | Percent by weight |
|---|---|
| Gum base | 20.00 |
| Corn syrup | 13.00 |
| Sugar | 64.75 |
| Glycerine | 1.00 |
| Peppermint flavor | 1.00 |
| Shellac-encapsulated aspartame | 0.25 |

Example III

A chewing gum containing a shellac-encapsulated food-grade acid and shellac-encapsulated aspartame can be made according to the following formulation:

| Ingredient | Percent by weight |
|---|---|
| Gum base | 25 |
| Sorbitol powder | 47.125 |
| 70% sorbitol solution | 12 |
| Mannitol powder | 8 |
| Glycerine | 6 |
| Color | 0.025 |
| Shellac-encapsulated citric acid | 0.8 |
| Flavor | 0.8 |
| Shellac-encapsulated aspartame | 0.25 |

In all of the foregoing examples, the shellac is present in an amount equal to 25.0% by weight of each encapsulated active ingredient to provide an impermeable, hydrophobic coating.

## Claims

1. A chewing gum composition comprising gum base, characterized by particles of high-potency sweetener, and a food grade shellac encapsulant surrounding said particles of the sweetener.

2. The chewing gum composition of claim 1, characterized in that the shellac encapsulant is present in an amount of about 25.0% by weight of the sweetener.

3. The chewing gum composition of claim 1, characterized in that sweetener is encapsulated by a fluidized bed coating method.

4. The chewing gum composition of claim 1, characterized in that the sweetener is encapsulated by a roller bed coating method.

5. The chewing gum composition of claim 4, characterized in that the sweetener is a dipeptide sweetener.

6. The chewing gum composition of claim 5, characterized in that the dipeptide sweetener is aspartame.

7. The chewing gum composition of claim 6, characterized in that the aspartame is present in an amount ranging from about 0.025% to about 2.0% by weight of the gum composition and the encapsulating agent is present in an amount ranging from about 5.0% to about 90.0% by weight of the aspartame.

8. The chewing gum composition of claim 7 characterized in that the shellac encapsulant is present in an amount of about 25.0% by weight of the aspartame.

## Patentansprüche

1. Kaugummizusammensetzung mit einer aus Gummi bestehenden Grundmasse, gekennzeichnet durch Teilchen aus einem starken Süßungsmittel und durch Schellack als lebensmittelechtes Einkapselungsmittel, das die Teilchen des Süßungsmittels umgibt.

2. Kaugummizusammensetzung nach Anspruch 1, dadurch gekennzeichnet, daß der Schellack als Einkapselungsmittel in einer Menge von etwa 25,0 Gew.% des Süßungsmittels vorhanden ist.

3. Kaugummizusammensetzung nach Anspruch 1, dadurch gekennzeichnet, daß das Süßungsmittel durch Wirbelschichtbeschichtung eingekapselt wird.

4. Kaugummizusammensetzung, dadurch gekennzeichnet, daß das Süßungsmittel durch Beschichtung mit Walzen eingekapselt wird.

5. Kaugummizusammensetzung nach Anspruch 4, dadurch gekennzeichnet, daß das Süßungsmittel ein Dipeptidsüßungsmittel ist.

6. Kaugummizusammensetzung nach Anspruch 5, dadurch gekennzeichnet, daß das Dipeptidsüßungsmittel Aspartam ist.

7. Kaugummizusammensetzung nach Anspruch 6, dadurch gekennzeichnet, daß das Aspartam in einer Menge von etwa 0,025 bis etwa 2,0 Gew.% der Gummizusammensetzung und das Einkapselungsmittel in einer Menge von etwa 5,0 bis etwa 90,0 Gew.% des Aspartams vorhanden ist.

8. Kaugummizusammensetzung nach Anspruch 7 dadurch gekennzeichnet, daß der Schellack als Einkapselungsmittel in einer Menge von etwa 25,0 Gew.% des Aspartams vorhanden ist.

## Revendications

1. Composition de chewing gum comprenant une gomme de base, caractérisée par des particules d'un édulcorant de grande force, et une gomme-laque d'enrobage de qualité alimentaire entourant lesdites particules de l'édulcorant.

2. Composition de chewing-gum selon la revendication 1, caractérisée en ce que la gomme-laque d'enrobage est présente à raison d'environ 25,0% du poids de l'édulcorant.

3. Composition de chewing-gum selon la revendication 1, caractérisée en ce que l'édulcorant est enrobé par un procédé d'enrobage et lit fluidisé.

4. Composition de chewing gum selon la revendication 1, caractérisée en ce que l'édulcorant est enrobé par un procédé d'enrobage en lit à rouleaux.

5. Composition de chewing gum selon la revendication 4, caractérisée en ce que l'édulcorant est un dipeptide édulcorant.

6. Composition de chewing gum selon la revendication 5, caractérisée en ce que le dipeptide édulcorant est l'aspartame.

7. Composition de chewing-gum selon la revendication 6, caractérisée en ce que l'aspartame est présent en une quantité comprise entre environ 0,025 et environ 2,0% par rapport au poids de la composition de la gomme et l'agent d'enrobage est présent en une quantité comprise entre environ 5,0 et environ 90,0% du poids de l'aspartame.

8. Composition de chewing gum selon la revendication 7, caractérisée en ce que la gomme-laque d'enrobage est présente en une quantité d'environ 25,0% du poids de l'aspartame.